(19) **Europäisches Patentamt**

**European Patent Office**

**Office européen des brevets**

(11) Publication number: **0 211 171**
**B1**

(12) **EUROPEAN PATENT SPECIFICATION**

(45) Date of publication of the patent specification:
27.12.89

(51) Int. Cl.⁴: **F16H 5/30**
// F16H5/12, F15B7/00

(21) Application number: 86107303.9

(22) Date of filing: 29.05.86

(54) Control device for a change-speed gear unit.

(30) Priority: 13.06.85 IT 6755385

(43) Date of publication of application:
25.02.87 Bulletin 87/9

(45) Publication of the grant of the patent:
27.12.89 Bulletin 89/52

(84) Designated Contracting States:
DE FR GB SE

(56) References cited:
EP-A- 0 032 883
EP-A- 0 170 132
DE-A- 2 510 392
DE-A- 3 319 950
FR-A- 1 334 809
GB-A- 969 417
US-A- 3 013 392
US-A- 3 253 481
US-A- 3 418 807

(73) Proprietor: **FIAT AUTO S.p.A., Corso Giovanni Agnelli 200, I-10135 Torino(IT)**

(72) Inventor: **Di Giusto, Nevio, Via Guarini, 48, I-10078 Venaria(IT)**
Inventor: **Candiglio, Romolo, Via Torino, 33, I-14019 Vilanova d'Asti(IT)**

(74) Representative: **Boggio, Luigi et al, STUDIO TORTA Società Semplice Via Viotti, 9, I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a control device for a change-speed gear unit arranged to transmit predetermined gear lever movements to selector means in the gear unit, for causing a required gear to be selected and engaged.

A device of this type is known (see EP-A 170 132, published 5. 2. 1986) comprising substantially a first rocker plate connected to the gear lever and hinged to a corresponding support plate by a ball joint, and a second rocker plate connected to said selector means and hinged to a corresponding support plate by a ball joint. The two rocker plates are connected together mechanically by three flexible cables provided with sheaths, a first end of each cable being connected to a point on the first rocker plate, and the other end being connected to a corresponding point on the second rocker plate. The three connection points on each rocker plate are disposed at the vertices of a triangle, at the centre of which the corresponding ball joint lies.

When the first rocker plate undergoes rocking by the action of the gear lever, it causes the flexible cables to move inside the relative sheaths, to cause the second rocker plate to undergo a corresponding rocking movement in order to operate the selector means.

While being of completely satisfactory operation, the said device sometimes causes installation problems because of the configuration of the flexible cables. This is bacause the configuration comprises certain portions with large radii of curvature which arise because of the arrangement of the cable ends at the relative rocker plates, as these ends have to be orthogonal to said plates.

In addition, the force required for operating the gear lever can be high when this is positioned at a larger distance from the gear unit, because of the friction between the cable and sheath. Finally, the condition of the flexible cables can change during operation, and require maintenance.

A similar remote control device is disclosed in EP-A 32 883.

In the U.S.-A 3 013 392 there is described a remote control device for transferring motion of a first universally tiltable rocker plate to a second universally tiltable rocker plate and comprising first and second sets of three hydraulic transducers, each set being associated with a respective rocker plate with the transducers of each set being arranged on the vertices of a triangle, each transducer of each set being connected to a respective transducer of the other set.

In the device of this patent the movements of the rocker plates are not well defined and the transducers are not reliable and cannot be easily fixed to the tiltable rocker plates.

The object of the present invention is to provide a control device for a change-speed gear unit of the stated type, which is free of the described drawbacks by being of very small overall size and easy installation, requiring no large operating force, and being entirely reliable even after long periods of use. This object is atteined by a control device for a change-speed gear unit arranged to transmit predetermined gear lever movements to selector means in the gear unit in order to cause a required gear to be selected and engaged, and comprising a first rocker plate connected to said lever and hinged to a corresponding support plate by means of a ball joint, and a second rocker plate connected to said selector means and hinged to a corresponding support plate by means of a ball joint, characterized in that it comprises a first and a second set of three hydraulic transducers, each of which comprises substantially a plunger axially mobile in a casing and arranged to generate, by virtue of its movement, a corresponding movement of a hydraulic fluid located inside said casing, said first and said second set of transducers being disposed at the vertices of a triangle, between said first rocker plate and the corresponding support plate and between said second rocker plate and the corresponding support plate respectively, pipes being provided to hydraulically connect each transducer of said first set to a corresponding transducer of said second set, and the end of each of said pipes which is connected to the relative transducer being disposed substantially orthogonal to the axis of the transducer plunger.

The device according to the invention will be more apparent from the description of one embodiment thereof given hereinafter by way of example with reference to the accompanying drawings, on which:

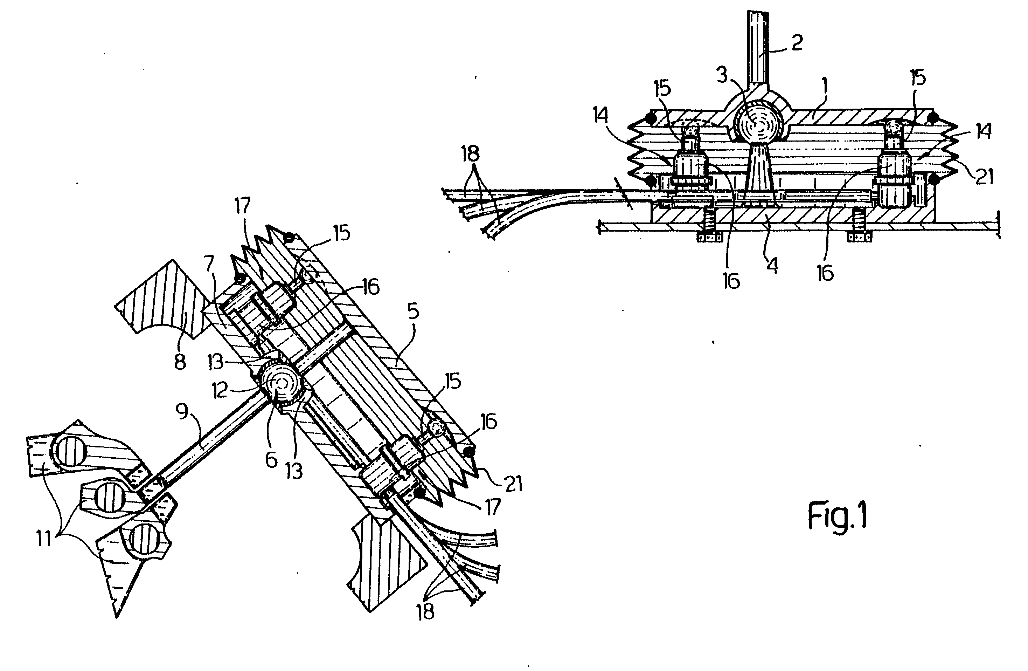

Figure 1 is a diagrammatic section through the device according to the invention;
Figures 2 and 3 are sections through two transducers forming part of the device.

The device comprises a first rocker plate 1 connected to the gear lever and hinged by a ball joint 3 to a corresponding support plate 4 to be fixed to a motor vehicle floor, and a second rocker plate 5 hinged by a further ball joint 6 to a corresponding support plate 7 to be connected to the vehicle gear unit 8. There is rigid with the rocker plate 5 an operating rod 9 for controlling the gear selector means, which consist for example of an assembly of forks 11 able to be moved axially and rotated by the action of said rod. Conveniently, the ball joint 6 is formed from a ball member 12, which is contained in two socket members 13 carried by the plate 7 and is rigid with the rod 9. The mechanical connection between the rocker plate 5 and said selector means can obviously be formed differently, for example by means of parts projecting from and rigid with the plate, and configured in such a manner as to be able to cooperate with said means.

A first set of three hydraulic transducers 14 is interposed between the rocker plate 1 and support plate 4. Each of them comprises substantially a plunger 15 mobile axially in a casing 16 and arranged to generate, by virtue of its movement, a corresponding movement of a hydraulic fluid located inside said casing. The axes of the plungers 15 of the three transducers are disposed at the vertices of a triangle which has the ball joint at its centre, and the end of each of said plungers is in contact with the rocker plate 1, the corresponding casing 16 being fixed to the relative support plate 4. A second set of three hydraulic transducers 17 similar to the preceding is interposed between the rocker plate 5 and support plate 7 using the same type of connection and arrangement as in the case of the preceding. In particular, the ball joint 6 is at the centre of the triangle through the vertices of which the axes of the plungers 15 of the transducers 17 pass.

Conveniently, an annular bellows of deformable material 21 connects the edges of the pairs of plates 1,4 and 5,7 together so as to define a casing which internally houses the transducers 14 and 17.

Three pipes 18 hydraulically connect each transducer 14 of the first set to a corresponding transducer 17 of the second. That end of each pipe which is connected to the relative transducer casing 16 is disposed substantially orthogonal to the axis of the corresponding plunger 15, with the result that these pipes overall form a substantially straight sheaf which takes up very little space because of the absence of curved pipe portions.

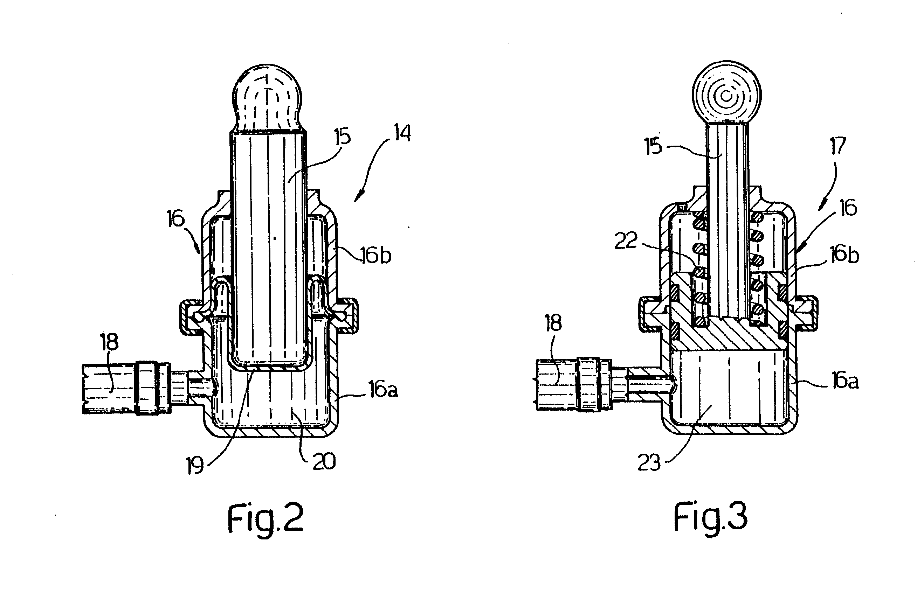

Conveniently, the transducers 14 of the first set have the structure shown in Figure 2 and comprise a deforamble diaphragm 19, the edges of which are clamped between the two casing parts 16a and 16b, and which with one of said parts defines a chamber 20 for the hydraulic fluid. The transducers 17 of the second set can have the structure shown in Figure 3. A spring 22 is interposed between the plunger 15 and casing 16 in order to urge the plunger into the chamber 23 containing the hydraulic fluid, so as to maintain this plunger in a predetermined position against the relative rocker plate.

The described structure of the transducers 14 and 17 can obviously be different, and in particular the springs 22 can be inserted in the transducers 14 of the first set instead of in those of the second. The device operates in the following manner.

When in the rest state the ends of the plungers 15 of the transducers 14 and 17 are kept in contact with the relative rocker plates 1 and 5 respectively, as the hydraulic pressure which fills the chambers 20 and 23 of said transducers and the pipes 18 is under pressure. When the attitude of the rocker plate (having its pivotal point at the centre of the ball joint 3) is changed by operating the gear lever 2, the plungers 15 of the transducers 14 are made to undergo movements corresponding to the movements which those points of said plate in contact with said plungers undergo. A predetermined movement of each plunger results in a volume variation in the chamber 20 of the relative transducer 14, with the result that the same volume of fluid becomes fed into the chamber 23 of the corresponding transducer 17 of the other set, in order to generate an equal stroke of the relative plunger. The result is that the second rocker plate 5 also varies its attitude at each instant, to become disposed in the same configuration as that in which in that instant the first rocker plate is disposed. The operating rod 9 thus undergoes the necessary suitably chosen movements for selecting and engaging a required gear.

It is apparent that the device has a very rapid response due to the hydraulic transmission of the control signals. Moreover, the required operating force is very low because of the absence of sliding friction in the transmission of the control action from the first to the second set of transducers. As the device permanently preserves its favourable characteristics without the need for maintenance, it is very reliable. Finally, it occupies a very small space and can be installed easily and rapidly in any situation.

## Claims

1. A control device for a change-speed gear unit arranged to transmit predetermined gear lever (2) movements to selector means (9) in the gear unit in order to cause a required gear to be selected and engaged, and comprising a first rocker plate (1) connected to said lever (2) and hinged to a corresponding support plate (4) by means of a ball joint (3), and a second rocker plate (5) connected to said selector means and hinged to a corresponding support plate (7) by means of a ball joint (12), characterized in that if comprises a first and a second set of three hydraulic transducers (14, 17), each of which comprises substantially a plunger (15) axially mobile in a casing (16) and arranged to generate, by virtue of its movement, a corresponding movement of a hydraulic fluid located inside said casing, said first and said second set of transducers being disposed at the vertices of a triangle, between said first rocker plate (1) and the corresponding support plate (4) and between said second rocker plate (5) and the corresponding support plate (7) respectively, pipes (18) being provided to hydraulically connect each transducer of said first set to a corresponding transducer of said second set, and the end of each of said pipes (18) which is connected to the relative transducer (14) being disposed substantially orthogonal to the axis of the transducer plunger (15).

2. A device as claimed in claim 1, characterised in that at least one spring (22) is disposed between each of said plungers (15) of one (17) of said sets of transducers and the relative casing (16).

3. A device as claimed in one of the preceding claims, characterised in that each transducer (14, 17) of at least one of said sets comprises a deformable diaphragm (19) disposed between said plunger (15) and said casing (16) and arranged to form with said casing a chamber (20) for said hydraulic fluid.

4. A device as claimed in one of the preceding claims, characterised in that said casings (16) of the three transducers (14, 17) of each of said sets are fixed respectively to the corresponding support plate (4, 7) whereas the ends of the plungers (15) of said transducers rest against the corresponding rocker plate (1, 5), each of said ball joints (3, 12) being disposed between the transducers of the relative set, a deformable bellows (21) being provided for connecting the edges of each rocker plate to the edges of the relative support plate in order to close the space defined between said plates.

## Patentansprüche

1. Kontrollsystem für Gangschaltung-Getriebeeinheit, in der Art montiert, daß es vorbestimmte Schalthebelbewegungen (2) auf Wählvorrichtungen (9) in der Getriebeeinheit überträgt, um zu veranlassen, daß der erforderliche Gang ausgewählt und eingelegt wird, bestehend aus einer ersten gebogenen Platte (1), verbunden mit besagtem Schalthebel (2) und an eine entsprechende Stützplatte (4) mit Kugelscharnieren (3) gehängt, und einer zweiten gebogenen Platte (5), verbunden mit besagten Wählvorrichtungen und an eine entsprechende Stützplatte (7) mit Kugelscharnieren (12) gehängt, dadurch gekennzeichnet, daß es aus einem ersteren und einem zweiten Satz von drei hydraulischen Wandlern (14, 17) besteht, jeder von ihnen besteht grundsätzlich aus einem Kolben (15), der sich auf einer Achse in einem Gehäuse (16) bewegt und in der Art montiert ist, daß er, aufgrund seiner Bewegung, eine entsprechende Bewegung der hydraulischen Flüssigkeit erzeugt, die sich innerhalb des besagten Gehäuses befindet, besagter ersterer und zweiter Satz von hydraulischen Wandlern befindet sich an den Scheitelpunkten eines Dreiecks, zwischen besagter ersterer gebogener Platte (5) und der entsprechenden Stützplatte (7), entsprechende Schläuche (16) sind so montiert, daß sie jeden einzelnen Wandler des ersten Satzes mit dem entsprechenden Wandler des zweiten Satzes hydraulisch verbinden, das Endstück von jedem dieser Schläuche (18), der mit dem entsprechenden Wandler (14) verbunden ist, ist grundsätzlich im rechten Winkel zu den Achsen des Wandlerkolbens (15) montiert.

2. System nach Anspruch 1, dadurch gekennzeichnet, daß sich mindestens eine Feder (22) zwischen jedem der besagten Kolben (15) eines (17) der besagten Wandlersätze und dem entsprechenden Gehäuse (16) befindet.

3. System nach einem der vorangegangenen Ansprüche, dadurch gekennzeichnet, daß jeder Wandler (14, 17), von mindestens einem dieser Sätze, aus einer elastischen Membran (19) besteht, die sich zwischen besagtem Kolben (15) und besagtem Gehäuse (16) befindet und in der Art montiert ist, daß sie, gemeinsam mit besagtem Gehäuse, eine Kammer (20) für besagte hydraulische Flüssigkeit bildet.

4. System nach einem der vorangegangenen Ansprüche, dadurch gekennzeichnet, daß besagte Gehäuse (16) der drei Wandler (14, 17), von jedem dieser besagten Sätze, in Bezug auf die entsprechenden Stützplatten (4, 7) befestigt sind, wobei die Enden der Kolben (15) der entsprechenden Wandler gegen die entsprechende Stützplatte (1, 5) bleiben, jedes der besagten Kugelscharniere (3, 12) befindet sich zwischen den Wandlern des entsprechenden Satzes; ein verformbarer Blasebalg (21) ist in der Art montiert, daß er die Kanten einer jeden der gebogenen Platten mit den Kanten der entsprechenden Stützplatte verbindet, um den Abstand zwischen den beiden besagten Platten zu schließen.

## Revendications

1. Dispositif de commande pour unité à changement de vitesse agencé pour transmettre des mouvements prédéterminés du levier de changement de vitesse (2) à des moyens en forme de sélecteur dans l'unité à changement de vitesse pour provoquer la sélection et l'engagement en prise d'une vitesse requise et comprenant un premier plateau oscillant (1) relié audit levier (2) et articulé à une plaque de support correspondante (4) au moyen d'un joint à rotule (3), et un second plateau oscillant (5) relié auxdits moyens en forme de sélecteur et articulé à une plaque de support correspondante (7) au moyen d'un joint à rotule (12), caractérisé en ce qu'il comprend un premier et un second jeu de trois transducteurs hydrauliques (14, 17), chacun d'eux comprenant essentiellement un plongeur (15) mobile axialement dans une enveloppe (16) et agencé pour générer, en vertu de son mouvement, un mouvement correspondant d'un fluide hydraulique disposé à l'intérieur de ladite enveloppe, ledit premier et ledit second jeu de transducteurs étant disposés respectivement aux sommets d'un triangle, entre ledit premier plateau oscillant (1) et la plaque de support correspondante (4) et entre ledit second plateau oscillant (5) et la plaque de support correspondante (7), des tuyaux (18) étant prévus pour relier hydrauliquement chaque transducteur dudit premier jeu à un transducteur correspondant dudit second jeu, et l'extrémité de chacun desdits tuyaux (18), reliée au transducteur correspondant (14), étant disposée sensiblement orthogonalement à l'axe du plongeur (15) du transducteur.

2. Dispositif selon la revendication 1, caractérisé en ce qu'un ressort (22) au moins est disposé entre chacun desdits plongeurs (15) de l'un (17) desdits jeux de transducteurs et l'enveloppe correspondante (16).

3. Dispositif selon l'une quelconque des précédentes revendications, caractérisé en ce que chaque transducteur (14, 17) de l'un au moins desdits jeux comprend un diaphragme déformable (19) disposé entre ledit plongeur (15) et ladite enveloppe (16) et agencé pour former avec ladite enveloppe une chambre (20) pour ledit fluide hydraulique.

4. Dispositif selon l'une quelconque des précédentes revendications, caractérisé en ce que lesdites enveloppes (16) des trois transducteurs (14, 17) de chacun desdits jeux sont fixées respectivement à la plaque de support correspondante (4, 7) tandis que les extrémités des plongeurs (15) desdits transducteurs reposent contre la plaque oscillante correspondante (1, 5), chacun desdits joints à rotule (3, 12) étant disposé entre les transducteurs du jeu correspondant, un soufflet déformable (21) étant prévu pour relier les bords de chaque plateau oscillant aux bords de la plaque de support correspondante de manière à fermer l'espace défini entre lesdites plaques.

Fig.1

Fig.2

Fig.3

EP 0 211 171 B1